Europäisches Patentamt

European Patent Office

Office européen des brevets

(11) Veröffentlichungsnummer: **0 239 103 B1**

# EUROPÄISCHE PATENTSCHRIFT

(45) Veröffentlichungstag der Patentschrift: **22.01.92**

(51) Int. Cl.⁵: **C07F 7/12**

(21) Anmeldenummer: **87104454.1**

(22) Anmeldetag: **26.03.87**

(54) **Verfahren zur Herstellung von Organohalogenensilanen.**

(30) Priorität: **26.03.86 DE 3610267**

(43) Veröffentlichungstag der Anmeldung:
**30.09.87 Patentblatt 87/40**

(45) Bekanntmachung des Hinweises auf die
Patenterteilung:
**22.01.92 Patentblatt 92/04**

(84) Benannte Vertragsstaaten:
**AT BE DE FR GB IT NL**

(56) Entgegenhaltungen:
**DE-C- 889 695**
**US-A- 2 949 481**

(73) Patentinhaber: **WACKER-CHEMIE GMBH**
**Prinzregentenstrasse 22**
**W-8000 München 22(DE)**

(72) Erfinder: **Rösch, Lutz, Prof. Dr. Dipl.-Chem.**
**Römerstrasse 29**
**W-8960 Kempten(DE)**
Erfinder: **Kratel, Günter, Dr. Dipl.-Chem.**
**Alpenblickstrasse 10**
**W-8968 Durach-Bechen(DE)**
Erfinder: **Stroh, Anton, Dr. Dipl.-Chem.**
**Englschalkinger Strasse 190**
**W-8000 München 81(DE)**

Rank Xerox (UK) Business Services

## Beschreibung

Organohalogensilane werden in großen Mengen als Ausgangsstoffe für die Herstellung von z. B. Organopolysiloxanen eingesetzt. Weiterhin dienen Organohalogensilane z. B. als Ausgangsstoffe zur Herstellung von in der Gasphase erzeugtem SiC.

Der bisher großtechnisch durchgeführte Syntheseweg zur Gewinnung von Organohalogensilanen führt über die Reduktion $SiO_2$-haltigen Materials zu elementarem Silicium bzw. Ferrosilicium. Großtechnisch hergestellte Produkte auf Siliciumbasis einschließlich Organohalogensilane und deren Folgeprodukte sind deshalb mit einem energieträchtigen Syntheseschritt belastet.

Aufgabe der Erfindung war es, einen Syntheseweg für Organohalogensilane und damit auch einen Syntheseweg für Folgeprodukte der Organohalogensilane zu finden, der weniger energieaufwendig als der vorstehend beschriebene Syntheseweg über den Reaktionsschritt zu elementarem Silicium ist.

Nun ist gemäß GB-A-805 674 bereits bekannt, Organohalogensilane und Organosilane aus $SiO_2$-haltigem Material durch Umsetzen mit Alkylaluminiumhalogeniden oder mit Aluminium und Kohlenwasserstoffhalogenid gegebenenfalls in Gegenwart von Katalysator zu gewinnen. Dieses Verfahren ermöglicht somit im Prinzip die Herstellung von Organohalogensilanen aus $SiO_2$-haltigem Material. Nachteiligerweise muß bei diesem Verfahren jedoch unter Feuchtigkeits- und Sauerstoffausschluß gearbeitet werden, da die Alkylaluminiumhalogenide, die sich in situ auch bei der Umsetzung mit Aluminium und Kohlenwasserstoffhalogenid bilden, unter Explosionen mit Wasser reagieren bzw. selbstentzündlich sind. Dies erfordert aufwendige Schutzmaßnahmen, die die großtechnische Anwendbarkeit einschränken. Weiter wird bei diesem Verfahren Aluminium verwendet, dessen Gewinnung energieaufwendig ist.

Gegenstand der Erfindung ist ein Verfahren zur Herstellung von Organohalogensilanen der allgemeinen Formel

$$X_{4-n}SiR_n,$$

worin

R = Methyl, Ethyl, n-Propyl, iso-Propyl, n-Butyl, iso-Butyl, Phenyl, Tolyl,
X = Cl, Br und
n = 1,2,3 bedeuten,

durch Umsetzung von $SiO_2$-haltigem Material mit Kohlenwasserstoffhalogenid

RX,

worin

R und X jeweils die oben dafür angegebene Bedeutung haben,
in Gegenwart eines Metalles oder Metallhalogenides gegebenenfalls unter Zugabe eine Katalysators, dadurch gekennzeichnet, daß die Umsetzung in Gegenwart von Eisenpulver und

a) Kohlenstoff und Katalysator, wobei $SiO_2$-haltiges Material, Eisenpulver, Kohlenstoff und Katalysator vor der Umsetzung mit RX bei 800 bis 1400 °C getempert werden

oder

b) Aluminiumtrihalogenid und/oder Bortrihalogenid, wobei Halogen für Chlor oder Brom steht, und gegebenenfalls Katalysator erfolgt, wobei Katalysator für Elemente aus der 1., 2. oder 8. Nebengruppe des Periodischen Systems der Elemente oder deren Halogenide oder Oxide steht.

Die Elemente der 1., 2. oder 8. Nebengruppe des Periodischen Systems der Elemente sind aus der Periodic Table of the Elements nach Mandeleev im Handbook of Chemistry and Physics, 61th Edition auf der Umschlaginnenseite unter Transition Elements Group 1b, 2b und 8 zu entnehmen.

Erfindungsgemäß eingesetztes $SiO_2$-haltiges Material weist einen $SiO_2$-Gehalt von vorzugsweise 40 bis 100 Gew.-% insbesondere 70 bis 100 Gew.-% auf. Die spezifische Oberfläche, gemessen nach BET-Methode, beträgt vorzugsweise mindestens 0,1 $m^2/g$, insbesondere mindestens 3 $m^2/g$.

Beispiele für erfindungsgemäß einzusetzendes $SiO_2$-haltiges Material sind Diatomeenerde, Kieselsäure wie Kieselkreide, Montmorrillonite, Magnesiumsilikate, Tone wie Bentonite und Kaolin, aluminiumarme Zeolithe, $SiO_2$-haltige Flugstäube u.a.

Erfindungsgemäß eingesetztes Eisenpulver weist einen Fe-Gehalt von vorzugsweise 70 bis 100 Gew.-%, insbesondere 95 bis 100 Gew.-% auf. Die spezifische Oberfläche gemessen nach BET-Methode, beträgt vorzugsweise mindestens 0,1 $m^2/g$. Kohlenstoff wird vorzugsweise in feinverteilter Form eingesetzt. Die spezifische Oberfläche beträgt vorzugsweise mindestens 0,5 $m^2/g$, insbesondere mindestens 5 $m^2/g$ nach BET.

Beispiele für erfindungsgemäß eingesetzten Kohlenstoff sind Ruße, Koksstaub, Aktivkohle, u.a.

Aluminiumtrihalogenid, und/oder Bortrihalogenid, wobei Halogen für Chlor oder Brom steht, wird vorzugsweise entweder in feinverteilter Form oder in gasförmigen Zustand eingesetzt. Dies kann in jeder geeigneten Form erfolgen, beispielsweise durch Beladen des Kohlenwasserstoffhalogenidstroms mit dem Halogenid oder durch separates Zudosieren. Bevorzugt wird Aluminiumtrichlorid für die Herstellung von Organochlorsilan und Aluminiumtribromid für die Herstellung von Organobromsilanen eingesetzt.

Kohlenwasserstoffhalogenid kann in jedem geeigneten Zustand eingesetzt werden, vorzugsweise in gasförmigem Zustand gegebenenfalls mit Intertgasanteilen wie z. B. Stickstoff oder Argon.

Die Katalysatoren werden vorzugsweise in feinverteilter Form den Ausgangssubstanzen beigemischt. Erfindungsgemäße Katalysatoren sind Elemente der 1., 2. Und 8. Nebengruppe des Periodischen Systems der Elemente,Halogenide dieser Elemente und Oxide dieser Elemente. Bevorzugte Katalysatoren sind Cu, Zn, Co, Ni, deren Oxide und deren Halogenide hierbei besonders die Chloride und Bromide. Beispiele für die Katalysatoren sind neben den genannten Elementen, $Cu_2O$, $CuO$, $ZnO$, $CoO$, $Co_3O_4$, $NiO$, $CuCl$, $CuCl_2$, $CuBr$, $CuBr_2$, $ZnCl_2$, $ZnBr_2$, $CoCl_2$, $CoBr_2$, $NiCl_2$, $NiBr_2$. Die Katalysatoren können einzeln oder in Kombinationen untereinander verwendet werden.

Alle Elemente der 1., 2., und 8. Nebengruppe des Periodischen Systems der Elemente,deren Halogenide und deren Oxide stellen erfindungsgemäße Katalysatoren dar, jedoch wird die Einsetzbarkeit mehrerer Elemente wie z. B. Ru, Os, Rh, Ir, Pd, Pt, Au, Ag wegen ihres hohen Preises oder z. B. Cd, Hg wegen der durch diese verursachten hohen Umweltbelastungen stark eingeschränkt. Desgleichen gilt für deren Halogenide und Oxide.

Das Molverhältnis von $SiO_2$:Fe beträgt vorzugszweise 3:1 bis 1:4 , insbesondere 1:2 bis 1:3; von $SiO_2$:C vorzugsweise 1:2 bis 1:5, insbesondere 1:3 bis 1:4; und von $SiO_2$:MX$_3$ (M = B,Al; X = Cl, Br) vorzugsweise 5:1 bis 1:5 insbesondere 1:1 bis 1:3.

Das Gewichtsverhältnis von Katalysator zur Menge eingesetzten $SiO_2$ beträgt vorzugsweise 0,01 bis 0,3 Gewichtsanteile, insbesondere 0,05 bis 0,2 Gewichtsanteile.

Zur Durchführung des Verfahrens werden S iO$_2$-haltiges Material, Fe-Pulver, Kohlenstoff oder ggf. Aluminiumtrihalogenid und ggf. Katalysator in den oben angebenenen Mengenverhältnissen innig vermischt. Ggf. werden die Einzelkomponenten oder deren Mischungen einem Mahlprozess unterworfen. Die Mischungen werden in Pulverform, als Pellets oder in stückiger Form eingesetzt. Die Zubereitung der Pellets und Formkörper, die ggf. bis zu 20 Gew.-% Bindemittel enthalten können, kann in jeder geeigneten Art erfolgen, beispielsweise durch Aufschlämmen oder Anteigen der Mischungen mit geeigneten Flüssigkeiten, vorzugsweise mit Wasser oder mit Methylenchlorid.

Als Bindemittel können beispielsweise Wasserglas, Melasse, Bentonit, Tone, Harze, Polyvinylacetat, Zellulose, Stärke u.a. verwendet werden.

Beispiele für Formkörper, in denen die erfindungsgemäß umzusetzenden Mischungen eingesetzt werden, sind Kugeln, Zylinder, Hohlstränge, Ringe und dergleichen.

Die Reaktion wird zumeist in Rohrreaktoren durchgeführt. Insbesondere für den kontinuierlichen Betrieb sind Fließbettanordnungen zweckmäßig.

Die Reaktionstemperatur beträgt vorzugsweise 200 bis 500° C, insbesondere 220 bis 450° C.

Beim Zusatz von Kohlenstoff und Katalysator wird $SiO_2$-haltiges Material, Eisenpulver, Kohlenstoff und Katalysator vor der Umsetzung mit RX vorzugsweise unter Inertgas wie z. B. Stickstoff oder Argon vorzugsweise 2 bis 35 Stunden bei 800 bis 1400° C, vorzugsweise 1000 bis 1300° C, insbesondere 1100 bis 1200° C getempert. Nach dem Abkühlen vorzugsweise unter Inertgas auf vorzugsweise 20 bis 500° C, insbesondere 200 bis 400° C wird die Umsetzung unter Zugabe von Kohlenwasserstoffhalogenid und ggf. durch Erhitzen auf die Reaktionstemperatur weitergeführt.

Die Verweilzeit von Kohlenwasserstoffhalogenid beträgt vorzugsweise insgesamt 1 bis 500 Sekunden, insbesondere 60 bis 120 Sekunden. Vorzugsweise wird das Verfahren beim Druck der umgebenden Atmosphäre, also bei 1020 hPa oder ungefähr 1020 hPa durchgeführt. Gegebenenfalls können jedoch auch höhere oder niedrigere Drucke angewandt werden.

Die Organohalogensilane verlassen den Reaktor in gasförmigem oder flüssigem Zustand und werden nach dem Fachmann bekannten Verfahren durch Kondensation und/oder Destillieren aufgearbeitet.

Die Erfindung wird nun anhand von Beispielen näher erläutert:

Beispiel 1:

75 g $SiO_2$-Staub (96,5 Gew.-% $SiO_2$) mit einer Oberfläche nach BET von 20 m²/g wurden mit 75 g Fe-Pulver (99,5 Gew.-% Fe, 0,37 m²/g), 60 g Ruß (26 m²/g) und 18 g Cu-Pulver gut vermischt und mit Wasser pelletisiert. Das erhaltene Granulat wurde dann im Vakuumschrank 2 Stunden bei 220° C getrocknet. 195 g dieser Mischung wurden in einen Rohrreaktor gegeben und unter Einleitung von Argon innerhalb von 4 Stunden auf 1100° C erwärmt. Die Reaktionsmischung wurde 13 Stunden bei dieser Temperatur gelassen. Anschliessend ließ man unter Argon auf 200° C abkühlen. Dann wurde anstelle des Argons Methylchlorid mit 50 ml/min eingeleitet und wieder aufgeheizt. Die Reaktion sprang bei 325° C an. Bei 350° C wurde sämtliches Methylchlorid verbraucht. Die Silanentwicklung hielt über 30 Stunden an. Es wurden 50 % der Theorie Silangemisch, bezogen auf eingesetztes Methylchlorid, der Zusammensetzung 80 Mol-% Methyltrichlorsilan. 5 Mol-% Dimethyldichlorsilan und 15 Mol-% Tetrachlorsilan erhalten.

Beispiel 2:

15 g SiO$_2$-Staub (96,5 Gew.-% SiO$_2$) mit einer Oberfläche nach BET von 20 m$^2$/g wurden mit 15 g Fe-Pulver (99,5 Gew.% Fe, 0,37 m$^2$/g), 6 g Ruß (26 m$^2$/g) und 3,6 g Cu-Pulver gut gemischt und vermischt mit Quarzwolle in einen Rohrreaktor gegeben und unter Einleiten von Argon innerhalb von 4,5 Stunden auf 1100° C erhitzt. Die Reaktionsmischung wurde 5 Stunden bei dieser Temperatur gelassen. Anschliessend ließ man unter Argon auf 200° C abkühlen. Dann wurde anstelle des Argons Methylchlorid mit 50 ml/min eingeleitet und wieder aufgeheizt. Bei 350° C wurde fast sämtliches Methylchlorid verbraucht. Es wurden 40 % der Theorie Silangemisch, bezogen auf eingesetztes Methylchlorid, bestehend aus Methyltrichlorsilan, Dimethyldichlorsilan, Trimethylchlorsilan und Tetrachlorsilan erhalten.

Beispiel 3:

30 g SiO$_2$-Staub (96,5 Gew.-% SiO$_2$) mit einer Oberfläche nach BET von 20 m$^2$/g und 90 g Fe-Pulver (99,5 Gew.-% Fe) mit einer Oberfläche von 0,37 m$^2$/g und 66,5 g AlCl$_3$ wurden unter Zusatz von wenig CH$_2$Cl$_2$ pelletisiert. Die Pellets wurden 3 Stunden im Vakuumschrank bei 120° C getrocknet und in einen Rohrreaktor gegeben. Dann wurde unter Einleiten von Methylchlorid aufgeheizt und bei 260° C setzte die Reaktion ein. Bei 350° C wurde sämtliches Methylchlorid verbraucht. Es wurden 40 % der Theorie Silangemisch, bezogen auf eingesetztes Methylchlorid, der Zusammensetzung 80 Mol-% Trimethylchlorsilan, 10 Mol-% Dimethyldichlorsilan und 10 Mol-% Methyltrichlorsilan erhalten.

Beispiel 4:

150 g SiO$_2$-Staub (96,5 Gew.-% SiO$_2$) mit einer Oberfläche nach BET von 20 m$^2$/g und 150 g Fe-Pulver ( 99,5 Gew.-% Fe, 0,37 m$^2$/g) wurden pelletisiert und mit einer Mischung aus 40 g Cu-Pulver und 30 g AlCl$_3$ schichtig in einen Rohrreaktor gegeben. Dann wurde unter Einleiten von Methylchlorid aufgeheizt und bei 200° C setzte die Reaktion ein. Bei 300° C wurde sämtliches Methylchlorid verbraucht. Es wurden 50 % der Theorie Silangemisch, bezogen auf eingesetztes Methylchlorid, der Zusammensetzung 75 Mol-% Methyltrichlorsilan, 3 Mol-% Dimethyldichlorsilan, 2 Mol-% Trimethylchlorsilan und 20 Mol-% Tetrachlorsilan erhalten.

Beispiel 5:

120 g SiO$_2$ -Staub (96,5 Gew.-% SiO$_2$ ) mit einer Oberfläche nach BET von 20 m$^2$/g und 240 g Fe-Pulver (99,5 Gew.-% Fe, 0,37 m$^2$/g), 266 g AlCl$_3$ und 6,5 g Zn-Pulver wurden unter Zusatz von wenig CH$_2$Cl$_2$ pelletisiert. Die Pellets wurden 3 Stunden in Vakuumschrank bei 120° C getrocknet und in einen Rohrreaktor gegeben. Dann wurde unter Einleiten von Methylchlorid aufgeheizt. Bei 400° C setzte die Reaktion ein. Bei 450° C wurde sämtliches Methylchlorid verbraucht. Es wurden 45 % der Theorie Silangemisch, bezogen auf eingesetztes Methylchlorid, der Zusammensetzung 55 Mol-% Trichlormethylsilan, 25 Mol-% Dichlordimethylsilan, 12 Mol-% Tetrachlorsilan und 8 Mol-% Trimethylchlorsilan erhalten.

Beispiel 6:

90 g SiO$_2$-Staub, 180 g Fe-Pulver (Oberflächen und Gew.-% gemäß Beispiel 5), 199 g AlCl$_3$ und 9,75 g CoCl$_2$ wurden wie in Beispiel 5 pelletisiert, getrocknet und in einen Rohrreaktor gegeben. Dann wurde unter Einleiten von Methylchlorid aufgeheizt und bei 270° C setzte die Reaktion ein. Bei 300° C wurde sämtliches Methylchlorid verbraucht. Es wurde 50 % der Theorie Silangemisch, bezogen auf eingesetztes Methylchlorid, der Zusammensetzung 70 Mol-% Trimethylchlorsilan, 15 Mol-% Dimethyldichlorsilan, 10 Mol-% Methyltrichlorsilan und 5 Mol-% Tetrachlorsilan erhalten.

Beispiel 7:

60 g SiO$_2$-Staub, 120 g Fe-Pulver (Oberflächen und Gew.-% gemäß Beispiel 5) und 133 g AlCl$_3$ wurden wie in Beispiel 5 pelletisiert, getrocknet und in einen Rohrreaktor gegeben. Dann wurde unter Einleitung von Ethylchlorid aufgeheizt. Bie 300° C setzte die Reaktion ein, bei 350° C wurde das eingesetzte Ethylchlorid weitgehend verbraucht. In einer vorgeschalteten Kühlfalle konnte eine Flüssigkeit aufgefangen werden, die neben unum gesetztem Ethylchlorid aus einem Silangemisch bestand. Das Silangemisch enthielt 70 Mol-% Triethylchlorsilan, 15 Mol-% Diethyldichlorsilan, 10 Mol-% Ethyltrichlorsilan und 5 Mol-% Tetrachlorsilan.

Beispiel 8:

180 g SiO$_2$-Staub wurden mit 504 g Fe-Pulver und mit 72 g Ruß (Oberflächen und Gew.-% gemäß Beispiel 1) und 9,75 g Zinkpulver wie in Beispiel 1 pelletiert und getrocknet. 190 g dieser Mischung wurden in einen Rohrreaktor gegeben und 30 Stunden unter Einleitung von Argon auf 1200° C erwärmt. Anschließend ließ man unter Argon auf Raumtemperatur abkühlen. Dann wurde anstelle des Argons Methylchlorid mit 50 ml/min eingeleitet und wieder aufgeheizt. Die Reaktion sprang bei 350° C an, bei 380° C wurde fast sämtliches Methylchlorid verbraucht. Es wurden 45 % der Theorie Silangemisch, bezogen auf eingesetztes Methylchlorid, der Zusammensetzung 85 Mol-% Methyltrichlorsilan und 15 Mol-% Tetrachlorsilan erhalten.

Beispiel 9 :

180 g SiO$_2$-Staub wurden mit 504 g Fe-Pulver und 72 g Ruß (Oberflächen und Gew.-% gemäß Beispiel 1) und 19,5 g NiCl$_2$ wie in Beispiel 1 pelletisiert und getrocknet. 190 g dieser Mischung wurden in einen Rohrreaktor gegeben und 30 Stunden unter Einleitung von Argon auf 1200° C erwärmt. Anschließend ließ man unter Argon auf 100° C abkühlen. Dann wurde anstelle des Argons Methylchlorid mit 50 ml/min eingeleitet und wieder aufgeheizt. Die Reaktion sprang bei 250° C an. Bei 350° C wurde nahezu sämtliches Methylchlorid verbraucht. Es wurden 40 % der Theorie Silangemisch, bezogen auf eingesteztes Methylchlorid, der Zusammensetzung 95 Mol-% Methyltrichlorsilan, 5 Mol-% Tetrachlorsilan erhalten.

Beispiel 10 :

180 g SiO$_2$-Staub wurden mit 504 g Fe-Pulver und 72 g Ruß (Oberflächen und Gew.-% gemäß Beispiel 1) und 9,5 g Cu-Pulver wie in Beispiel 1 pelletiert und getrocknet. 190 g dieser Mischung wurden in einen Rohrreaktor gegeben und 34 Stunden unter Einleitung von Argon auf 1200° C erwärmt. Anschliessend ließ man unter Argon auf Raumtemperatur abkühlen. Dann wurde anstelle des Argons Ethylchlorid mit 40 ml/min eingeleitet und wieder aufgeheizt. Die Reaktion sprang bei 300° C an. Bei 350° C wurde ein Großteil des eingesetzten Ethylchlorids umgesetzt. Es wurden 30 % der Theorie Silangemisch, bezogen auf eingesetztes Ethylchlorid, der Zusammensetzung 80 Mol-% Ethyltrichlorsilan, 10 Mol-% Diethyldichlorsilan und 10 Mol-% Tetrachlorsilan erhalten.

Beispiel 11 :

420 g Bentonit (58,3 Gew.-% SiO$_2$) mit einer Oberfläche nach BET von 36 m$^2$/g wurden mit 420 g Fe-Pulver (99,5 Gew.-% Fe, 0,37 m$^2$/g), 168 g Ruß (26 m$^2$/g) und 20 g Cu-Pulver vermischt, pelletisiert und wie in Beispiel 1 getrocknet. 200 g dieser Mischung wurden in einen Rohrreaktor gegeben und unter Einleitung von Argon 12 Stunden auf 1100° C erwärmt. Anschließend ließ man unter Argon auf 200° C abkühlen. Dann wurde anstelle des Argons Methylchlorid mit 50 ml/min eingeleitet und wieder aufgeheizt. Die Reaktion sprang bei 330° C an. Bei 350° C wurde sämtliches Methylchlorid verbraucht. Es wurden 45 % der Theorie Silangemisch bezogen auf eingesetztes Methylchlorid, der Zusammensetzung 70 Mol-% Methyltrichlorsilan, 5 Mol-% Dimethyldichlorsilan und 25 Mol-% Tetrachlorsilan erhalten.

**Patentansprüche**

1. Verfahren zur Herstellung von Organohalogensilanen der allgemeinen Formel

   $X_{4-n}SiR_n$,

   worin
   R =     Methyl, Ethyl, n-Propyl, iso-Propyl, n-Butyl, iso-Butyl, Phenyl, Tolyl,
   X =     Cl, Br und
   n =     1,2,3 bedeuten,

   durch Umsetzung von SiO$_2$-haltigem Material mit Kohlenwasserstoffhalogenid

   RX,

   worin
   R und X jeweils die oben dafür angegebene Bedeutung haben,

   in Gegenwart eines Metalles oder Metallhalogenids gegebenenfalls unter Zugabe eines Katalysators, **dadurch gekennzeichnet,** daß die Umsetzung in Gegenwart von Eisenpulver und

   a) Kohlenstoff und Katalysator, wobei SiO$_2$-haltiges Material, Eisenpulver, Kohlenstoff und Katalysator vor der Umsetzung mit RX bei 800 bis 1400° C getempert werden

   oder

   b) Aluminiumtrihalogenid und/oder Bortrihalogenid, wobei Halogen für Chlor oder Brom steht, und gegebenenfalls Katalysator erfolgt, wobei Katalysator für Elemente aus der 1., 2. oder 8. Nebengruppe des Periodischen Systems der Elemente oder deren Halogenide oder Oxide steht.

2. Verfahren nach Anspruch 1, **dadurch gekennzeichnet,** daß die Umsetzung bei 200 bis 500° C durchgeführt wird.

3. Verfahren nach Anspruch 1 oder 2, **dadurch gekennzeichnet,** daß SiO$_2$-haltiges Material mit einem SiO$_2$-Gehalt von 40 bis 100 Gew.-% eingesetzt wird.

4. Verfahren nach einem oder mehreren der Ansprüche 1 bis 3, **dadurch gekennzeichnet,** daß SiO$_2$-haltiges Material mit einer spezifischen Oberfläche, gemessen nach der BET-Methode, von mindestens 0,1 m²/g eingesetzt wird.

5. Verfahren nach einem oder mehreren der Ansprüche 1 bis 4, **dadurch gekennzeichnet,** daß Eisenpulver mit einem Fe-Gehalt von 70 bis 100 Gew.-% eingesetzt wird.

6. Verfahren nach einem oder mehreren der Ansprüche 1 bis 5, **dadurch gekennzeichnet,** daß Eisenpulver mit einer spezifischen Oberfläche, gemessen nach der BET-Methode, von mindestens 0,1 m²/g eingesetzt wird.

## Claims

1. Process for the preparation of organohalogenosilanes of the general formula

$$X_{4-n}SiR_n$$

where R is methyl, ethyl, n-propyl, iso-propyl, n-butyl, iso-butyl, phenyl or tolyl,
X is Cl or Br and
n is 1, 2 or 3,
by reacting $SiO_2$-containing material with a hydrocarbon halide

$$RX$$

where R and X each have the meaning indicated for them above, in the presence of a metal or metal halide, if appropriate with the addition of a catalyst, characterised in that the reaction is carried out in the presence of iron powder and

a) carbon and a catalyst, in which case the $SiO_2$-containing material, the iron powder, the carbon and the catalyst are subjected to a heat treatment at 800 to 1400°C before the reaction with RX

or

b) an aluminium trihalide and/or boron trihalide, wherein halogen represents chlorine or bromine, and, if appropriate, a catalyst, the catalyst representing elements from the 1st, 2nd or 8th subgroup of the periodic system of the elements or halides or oxides thereof.

2. Process according to Claim 1, characterised in that the reaction is carried out at 200 to 500°C.

3. Process according to Claim 1 or 2, characterised in that $SiO_2$-containing material having an $SiO_2$ content of 40 to 100% by weight is employed.

4. Process according to one or more of Claims 1 to 3, characterised in that $SiO_2$-containing material having a specific surface area, measured by the BET method, of at least 0.1 m²/g is employed.

5. Process according to one or more of Claims 1 to 4, characterised in that iron powder having an Fe content of 70 to 100% by weight is employed.

6. Process according to one or more of Claims 1 to 5, characterised in that iron powder having a specific surface area, measured by the BET method, of at least 0.1 m²/g is employed.

## Revendications

1. Procédé pour préparer des organo-halogénosilanes répondant à la formule générale :

$$X_{4-n}SiR_n$$

dans laquelle
R = méthyle, éthyle, n-propyle, isopropyle, n-butyle, isobutyle, phényle ou tolyle,
X = Cl ou Br, et
n = 1, 2 ou 3,
par réaction d'une matière contenant $SiO_2$ avec un hydrocarbure halogéné répondant à la formule :

$$RX$$

dans laquelle R et X ont les significations qui leur ont été données ci-dessus, en présence d'un métal ou d'un halogénure de métal, et éventuellement en présence d'un catalyseur, procédé caractérisé en ce que la réaction est effectuée en présence de poudre de fer et
a) de carbone et d'un catalyseur, la matière contenant $SiO_2$, la poudre de fer, le carbone et le catalyseur étant cuits à une température de 800 à 1400°C avant la réaction avec RX,
ou
b) d'un trihalogénure d'aluminium et/ou d'un trihalogénure de bore, dont l'halogène est le chlore ou le brome, et éventuellement d'un catalyseur, le catalyseur étant pris dans l'ensemble constitué par les éléments des sous-groupes 1, 2 et 8 de la classification périodique des éléments, leurs halogénures et leurs oxydes.

2. Procédé selon la revendication 1 caractérisé en ce que la réaction est effectuée à une température de 200 à 500° C.

3. Procédé selon l'une des revendication 1 et 2, caractérisé en ce qu'on utilise une matière contenant $SiO_2$ dont la teneur en $SiO_2$ est comprise entre 40 et 100 % en poids.

4. Procédé selon l'une quelconque des revendications 1 à 3, caractérisé en ce qu'on utilise une matière contenant $SiO_2$ qui a une surface spécifique, mesurée par la méthode BET, d'au moins 0,1 $m^2$/g.

5. Procédé selon l'une quelconque des revendications 1 à 4, caractérisé en ce qu'on utilise une poudre de fer dont la teneur en Fe est comprise entre 70 et 100 % en poids.

6. Procédé selon l'une quelconque des revendications 1 à 5, caractérisé en ce qu'on utilise une poudre de fer qui a une surface spécifique, mesurée par la méthode BET, d'au moins 0,1 $m^2$/g.